# EUROPEAN PATENT SPECIFICATION

(11) **EP 3 101 333 B1**
(45) Date of publication and mention of the grant of the patent: **06.11.2019**
(21) Application number: 16172705.2
(22) Date of filing: 02.06.2016
(51) Int. Cl.: F21L 4/04, F21L 4/02, F21V 14/02, F21V 19/02, F21V 21/30, H05B 33/08, F21L 4/08, F21V 21/096, F21V 23/04, H02J 7/00, F21Y 101/00, F21Y 115/10

(54) **PORTABLE LIGHT DEVICE**
TRAGBARE LICHTVORRICHTUNG
DISPOSITIF LUMINEUX PORTABLE

(30) Priority: 04.06.2015 US 201562170738 P
(43) Date of publication of application: 07.12.2016
(73) Proprietor: Inskeep, Mathew, Highland Beach, FL 33487 (US)
(72) Inventor: Inskeep, Mathew, Highland Beach, FL 33487 (US)
(74) Representative: Nederlandsch Octrooibureau

(56) References cited:
- EP-A2- 2 849 539
- GB-A- 2 502 180
- US-A1- 2006 017 688
- US-A1- 2008 137 326
- US-A1- 2009 135 611
- US-A1- 2012 140 467
- US-A1- 2013 128 565
- US-A1- 2014 098 526

## Description

### TECHNICAL FIELD

The invention relates to a portable light device, for example a flashlight or work light.

### BACKGROUND ART

Portable light devices, like flash lights or work lights, are widely known. A problem experienced with the known portable light devices is that it may be difficult for the user to properly position the light device so that the emitted light beam illuminates the intended region. It would therefore be desirable to provide a portable light device with improved handling characteristics. US2013/0128565 discloses a portable work light with hingeable light elements. US2009/0135611 discloses a portable lighting device that can be used as a flashlight, and that has pivotably mounted light bars.

### SUMMARY OF INVENTION

Therefore, according to a first aspect of the invention, there is provided a portable light device, comprising a main body element comprising a substantially tubular shape, a head element being hingeably connected to the main body element by means of a hinge connection to allow multiple orientation of the head element relative to the main body element, the head element comprises a main light unit, and a wing element being connected to the head element, wherein the wing element accommodates an array of multiple light outputs along an illumination surface which are configured to provide additional light assistance to the main light unit, and wherein the main light unit and the array of multiple light outputs are configured to be activated simultaneously or to be activated separately; characterized in that the main light unit is configured to provide a flash light illumination, in that the wing element is configured to transition between a collapsed state wherein the light device is usable as a hand held flashlight, and an expanded state wherein the wing element provides illumination assistance to the main light unit by increasing an area of illumination, and in that a recess portion is provided in and along the outer surface of the main body element, the recess portion being adapted to accommodate the wing element in the collapsed state wherein the wing element is folded inwards against the main body element.

The portable light device may be a flashlight or work light. The proposed light device provides a hand held or free standing light unit with a flexible head component containing a main light as well as multiple moveable led array panels around the unit for maximum light output. The proposed light device allows various methods of orienting a light source, to enable the user to maximize the utility of the light unit by controlling the orientation of the led array panels, in addition for allowing a hands free usage.

According to an embodiment, the device comprises a rare-earth magnet provided at a position away from the head element, preferably at a base portion of the main body element.

According to an embodiment, the main body element houses a circuitry connected to an internal energy source, and wherein the circuitry comprises a multiplex unit to actively control a driving circuit.

According to a further embodiment, the driving circuit is a first drive circuit comprising a universal serial bus (USB).

According to yet a further embodiment, the serial bus circuit is configured to be simultaneously activated with the main light unit.

According to another further embodiment, the driving circuit is a main light drive circuit.

According to another further embodiment, the driving circuit is a panel array drive circuit.

According to further embodiments, the multiplex unit is part of a micro-controller or a separate circuitry.

According to further embodiments, the multiplex unit comprises a system for simultaneously distributing a predetermined voltage and current to power a micro-controller for activating a circuit.

According to yet a further embodiment, the portable light device comprises a selector means for sending a high pulse to the micro-controller, and wherein the micro-controller is programmed to look for the high pulse moving between sequences.

According to yet a further embodiment, the high pulse is a first, second or third pulse, containing a command that may be equal or different from each other.

According to further embodiments, the micro-controller is configured to send a first pulse comprising a command to the multiplex unit to activate the main light unit, by allowing a flow of energy source to flow from an internal energy source through the driving circuit or to send a second pulse comprising a command to the multiplex unit to activate the array of multiple light outputs, by allowing a flow of energy source to flow from the internal energy source through the panel array driving circuit.

A command may be issued by the multiplex unit for it to power the USB circuit. The USB circuit may remain in the active position until the light unit is completely powered down. An output receptacle of the USB circuit may be configured to provide charging means to a small consumer electronic device that is temporarily connected to the output receptacle. This enables the user to maximize the utility of the light unit by using energy stored in the light device batteries to power or recharge small personal electronic devices.

According to further embodiments, the micro-controller is configured to send a third pulse comprising a command to the multiplex unit to activate the array of multiple light outputs and the main light unit simultaneously, by allowing a flow of energy source to flow from the internal energy source through the driving circuit.

### BRIEF DESCRIPTION OF DRAWINGS

Embodiments will now be described, by way of example only, with reference to the accompanying schematic drawings in which corresponding reference symbols indicate corresponding parts. In the drawings, like numerals designate like elements.
Figure 1 schematically shows a portable light device according to an embodiment;
Figure 2 presents an schematic diagram of the internal electrical construction of the portable light device according to an embodiment;
Figure 3 shows an expandable view of a portable light device according to an embodiment, with led array panels in a fully extended position, and
Figure 4 shows a free standing view of a portable light device according to an embodiment.

The figures are meant for illustrative purposes only, and do not serve as restriction of the scope or the protection as laid down by the claims.

### DESCRIPTION OF EMBODIMENTS

The following is a description of certain embodiments of the invention, given by way of example only and with reference to the figures.

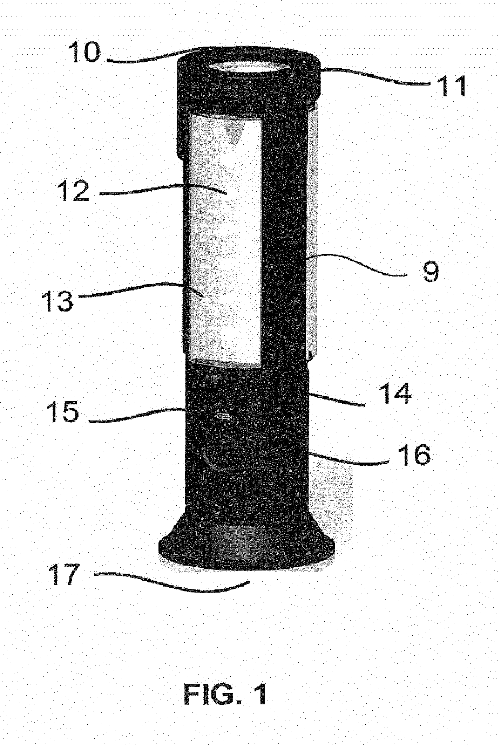

Figure 1 shows an embodiment of a portable light device, which comprises a main body element 9, a head element 11, three wing elements 13a, 13b, 13c, and a fixation element 17.

The head element 11 comprises a main light unit 10 for providing a flash light illumination. The head element 11 is hingeably connected to the main body element 9 via a hinge connection 28, to allow multiple orientation of the head element 11 relative to the main body element 9. The wing elements 13a-13c are hingeably connected to the head element 11. Each wing element 13a-13c accommodates an array of multiple light outputs 12a, 12b, 12c, which are provided along associated illumination surfaces, and which are configured to provide additional light assistance to the main light unit 10. The main light unit 10 and the array of multiple light outputs 12a-12c are configured to be activated simultaneously or to be activated separately.

The main body element 9 has a substantially tubular shape, with recess portions provided along the outer surface of the main body element 9, for accommodating the wing elements 13a-13c in a collapsed state, folded inwards against the main body element 9 in this example.

Here, the fixation element 17 comprises rare-earth magnet arranged at a base portion of the main body element 9, at a distal end opposite to the main light unit 10.

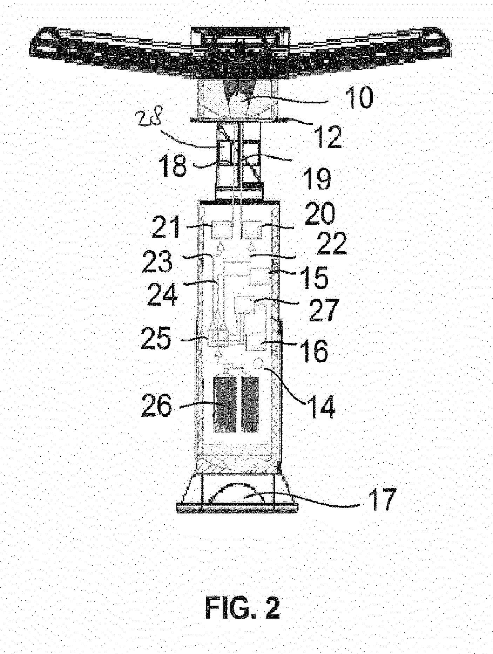

As illustrated in figure 2, the main body element 9 houses circuitry components connected to an internal energy source 26. The circuitry comprises a multiplex unit 25 to actively control driving circuit components 15, 20, 21.

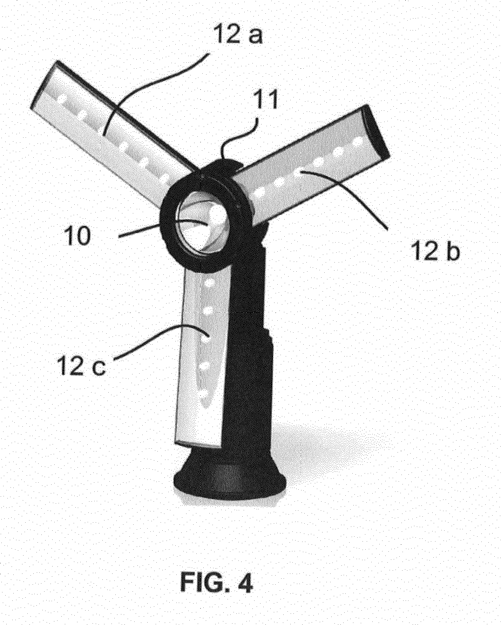

The light may act as both a work light and a hand held flashlight. This particular light unit is surrounded by various light panels with an array of built in light emitting diodes. Additionally, each panel can be oriented in a vertical position as well as a horizontal position by expanding the panels outward and tilting the flexible head 11 of the light unit as shown on figure number 3. The flexible head can bend 90 degrees in either direction to allow various orientations to the light panels. They can be individually moved and expanded to maximize the total area of illumination. The panels accommodate an array of several led lights aligned through the center of each panel as seen on figure 1. The flexible head 11 also serves as a light source, by having a LED light 10 mounted in the center as shown on figure 4.

Figure 1 Illustrates the light unit in a free standing position outlining its main components. The light unit preferred embodiment 9 is made of a light weight, fabricated using a polymeric material enclosure, cylindrical in shape, measuring approximately eight inches in length and about four inches in width. The light unit embodiment 9 can be used as a standalone device, but it can also be attached to a metal surface by using a rare earth magnet 17 located at the base of the unit. This additional retaining features is advantageous when performing work when a hands free operation is preferred. The light unit can also be held by grabbing the bottom portion of the enclosure. This method is preferred when using the light unit as a flashlight.

The present invention integrates electrical features that are actuated by a momentary push power button 16. This switch when momentarily closed, sends a signal to the internal control circuit to power the light unit internal circuitry such as the universal serial bus 15, or the led panels array 13 or the main light 10 of the device.

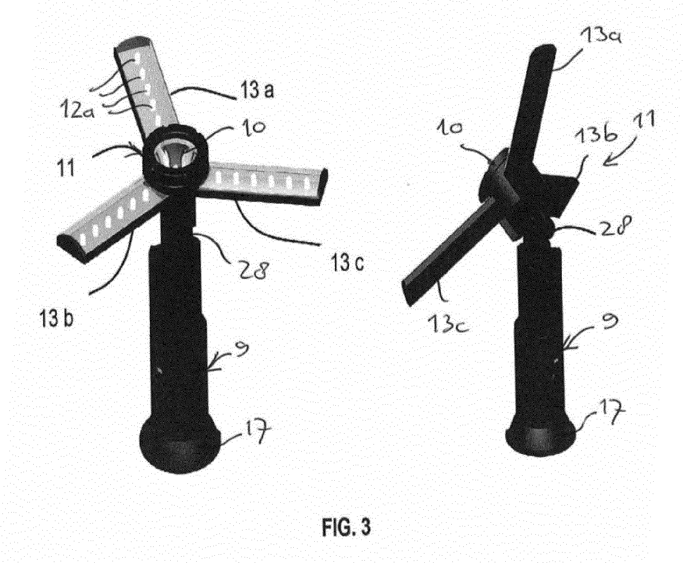

Referring to figure 3, the main utility of this invention involves having a light source with multiple light outputs. The integrated features make this particular light unit a multi-functional device in a single useful compact design.

Figure 2 is a block diagram of the internal electrical components required to operate the invention. The light unit will be powered by an internal energy source 26 made up of various battery cells with the necessary voltage and energy to drive the light unit built-in features. The electric current between the energy source and each of the internal features will be transferred using various circuits design to output the proper voltage and current to each individual component.

Initially, this light unit will become activated when the momentary power push button 16 is pressed down. This particular power button also serves as a selector button to activate the built-in features inside the light unit. The power button 16 when initially activated, will send a high pulse to the micro-controller 27, indicating the desired mode of operation. The width of the high pulse is only momentary in order to command the micro-controller to change mode sequence and move into the next option, otherwise, this pulse will always remain in an active low position. The pulse can be described as a logic binary signal. The micro-controller 27 will be programed to look for this active high pulse before moving between sequences. Once this pulse is received, the micro-controller will send a command to the multiplex unit 25 to activate the corresponding circuit. The multiplex unit 25 controls the internal drive circuits. Referring to figure 2, the first drive circuit is number 15, this is the circuit that drives the universal serial bus. The second drive circuit corresponds to the main light drive circuit number 20 and the last drive circuit is for the lights on the panels which correspond to drive circuit 21. The multiplex unit 25 could exist as part of the micro-controller or as a separate circuit in which it consists of a system that will be distributing simultaneously the proper voltage and current to power each independent feature as previously described.

The first pulse logic sequence is to power the main led light 10. The first pulse to the micro-controller 27, will send the command to the multiplex unit to activate the main light unit 10, by allowing energy to flow from the energy source through the driving circuit 21. Simultaneously, a command will also be issued by the multiplex unit for it to power the universal serial bus circuit 15. In this particular design, the universal serial bus circuit will remain in the active position until the light unit is completely powered down. In other words, the USB feature is active all the time except when the unit is powered down. The utility of the USB output receptacle is to provide charging means to small consumer electronic devices.

The secondary pulse, when received by the micro-controller 27, via momentary power switch 16, will command the multiplex unit 25 to shut down the main light unit driver circuit 21 and instead power up the driver circuit 20. This will allow energy to flow from the energy source to all light led panels (12a-c in figure 4). This particular driver circuit 20 is used to power the light output of all panels. This light unit as previously described and shown on figures 3 and 4, contains multiple led panel arrays located around the light unit. Figure 3, depicts the position and full extended view for each of the led panel arrays 13a-13c.

The third pulse to the micro-controller 27, will activate all functions simultaneously for a complete operation of the light unit. Maximum energy consumption is consumed during this time, as such; the micro-controller 27, will monitor the battery level and energy consumed by the light unit and will shut down when power is depleted but not at zero percent, some energy still remains for safety circuit devices.

The components described on Figure 1 through 4 cooperate to produce a comfortable and easy to use multi illumination light unit.

The present invention may be embodied in other specific forms, and the described embodiments are to be considered in all respects only as illustrative and not restrictive. The scope of the invention is, therefore, indicated by the appended claims rather than by the foregoing description. It will be apparent to the person skilled in the art that alternative and equivalent embodiments of the invention can be conceived and reduced to practice. All changes which come within the meaning and range of equivalency of the claims are to be embraced within their scope.

### LIST OF REFERENCE SYMBOLS

- 9: Light unit enclosure
- 10: Main light & reflector
- 11: Flexible light head
- 12: Panel array led
- 12a: Panel array 1
- 12b: Panel array 2
- 12c: Panel array 3
- 13: Panel body
- 13a: Panel body 1
- 13b: Panel body 2
- 13c: Panel body 3
- 14: Power Indicator
- 15: USB receptacle
- 16: Power Switch
- 17: Rare earth magnet
- 18: Panel array led power line
- 19: Main light led power line
- 20: Panel array driving circuit
- 21: Main light driving circuit
- 22: Panel array driving circuit power line
- 23: Main light driving circuit power line
- 24: USB power line
- 25: Multiplex unit
- 26: Battery cells compartment
- 27: Micro-controller
- 28: Hinge connection

## Claims

1. A portable light device comprising:
- a main body element (9) comprising a substantially tubular shape;
- a head element (11) being hingeably connected to the main body element (9) by means of a hinge connection (28) to allow multiple orientation of the head element (11) relative to the main body element (9), the head element (11) comprises a main light unit (10), and
- a wing element (13a-c) being hingeably connected to the head element (11), wherein the wing element (13a-c) accommodates an array of multiple light outputs (12a-c) along an illumination surface which are configured to provide additional light assistance to the main light unit (10), and_wherein the main light unit (10) and the array of multiple light outputs (12a-c) are configured to be activated simultaneously or to be activated separately;
**characterized in that** the main light unit (10) is configured to provide a flash light illumination, **in that** the wing element is configured to transition between a collapsed state wherein the light device is usable as a hand held flashlight, and an expanded state wherein the wing element provides illumination assistance to the main light unit (10) by increasing an area of illumination,
and **in that** a recess portion is provided in and along the outer surface of the main body element, the recess portion being adapted to accommodate the wing element (13a-c) in the collapsed state wherein the wing element is folded inwards against the main body element.

2. The portable light device according to claim 1, wherein the device comprises a rare-earth magnet (17) provided at a position away from the head element (11), preferably at a base portion of the main body element (9).

3. The portable light device according to claim 1 or 2, wherein the main body element (9) houses a circuitry connected to an internal energy source (26), and wherein the circuitry comprises a multiplex unit (25) to actively control a driving circuit (15, 20, 21).

4. The portable light device according to claim 3, wherein the driving circuit (15, 20, 21) is a first drive circuit (15) comprising a universal serial bus.

5. The portable light device according to claim 4, wherein the serial bus circuit (15) can be simultaneously activated with the main light unit (10).

6. The portable light device according to claim 3, wherein the driving circuit (15, 20, 21) is a main light drive circuit (20).

7. The portable light device according to claim 3, wherein the driving circuit (15, 20, 21) is a panel array drive circuit (21).

8. The portable light device according to any one of claims 3-7, wherein the multiplex unit (25) is part of a micro-controller or a separate circuitry.

9. The portable light device according to any one of claims 3-8, wherein the multiplex unit (25) comprises a system for simultaneously distributing a predetermined voltage and current to power a micro-controller (27) for activating a circuit.

10. The portable light device according to claim 9, wherein a selector means (16) is provided for sending a high pulse to the micro-controller (27), and wherein the micro-controller (27) is programmed to look for the high pulse moving between sequences.

11. The portable light device according to claim 10, wherein the high pulse can be a first, second or third pulse, containing a command that can be equal or different from each other.

12. The portable light device according to claim 10 or 11, wherein the micro-controller (27) is configured to send a first pulse comprising a command to the multiplex unit (25) to activate the main light unit (10), by allowing a flow of energy source to flow from an internal energy source (26) through the driving circuit (15, 20, 21) or to send a second pulse comprising a command to the multiplex unit (25) to activate the array of multiple light outputs (12a-c), by allowing a flow of energy source to flow from the internal energy source (26) through the panel array driving circuit (15, 20,21).

13. The portable light device according to any one of the claims 10-12, wherein the micro-controller (27) is configured to send a third pulse comprising a command to the multiplex unit (25) to activate the array of multiple light outputs (12a-c) and the main light unit (10) simultaneously, by allowing a flow of energy source to flow from the internal energy source (26) through the driving circuit (15, 20, 21).

## Patentansprüche

1. Tragbare Lichtvorrichtung, umfassend:
- ein Hauptkörperelement (9), das eine im Wesentlichen rohrförmige Form umfasst;
- ein Kopfelement (11), das mit dem Hauptkörperelement (9) mittels einer Gelenkverbindung (28) schwenkbar verbunden ist, um multiple Ausrichtung des Kopfelements (11) relativ zu dem Hauptkörperelement (9) zu ermöglichen, wobei das Kopfelement (11) eine Hauptlichteinheit (10) umfasst, und
- ein Flügelelement (13a-c), das mit dem Kopfelement (11) schwenkbar verbunden ist, wobei das Flügelelement (13a-c) ein Array von mehreren Lichtquellen (12a-c) entlang einer Beleuchtungsfläche aufnimmt, die konfiguriert sind, um der Hauptlichteinheit (10) zusätzliche Lichtunterstützung zu liefern, und wobei die Hauptlichteinheit (10) und das Array von mehreren Lichtquellen (12a-c) konfiguriert sind, um gleichzeitig aktiviert zu werden, oder um separat aktiviert zu werden;
**dadurch gekennzeichnet, dass** die Hauptlichteinheit (10) dazu konfiguriert ist, eine Taschenlampebeleuchtung zu liefern, dadurch dass das Flügelelement konfiguriert ist, um zwischen einem zusammengeklappten Zustand, in dem die Lichtvorrichtung als eine händische Taschenlampe verwendbar ist, und einem aufgeklappten Zustand, in dem das Flügelelement durch Vergrößerung einer Beleuchtungsfläche Beleuchtungsunterstützung für die Hauptlichteinheit (10) liefert, zu wechseln,
und dadurch, dass ein Vertiefungsabschnitt in dem Hauptkörperelement vorgesehen ist und entlang der Außenfläche des Hauptkörperelements (9) bereitgestellt ist, wobei der Vertiefungsabschnitt dazu konfiguriert ist das Flügelelement (13a-c) unter zu bringen, wenn das Flügelelement im eingeklappten Zustand nach innen gegen das Hauptkörperelement gefaltet ist.

2. Tragbare Lichtvorrichtung nach Anspruch 1, wobei die Vorrichtung einen Seltenerdmagneten (17) umfasst, der an einer vom Kopfelement (11) entfernten Stelle, vorzugsweise an einem Basisabschnitt des Hauptkörperelements (9), bereitgestellt ist.

3. Tragbare Lichtvorrichtung nach Anspruch 1 oder 2, wobei das Hauptkörperelement (9) eine Schaltung, die mit einer internen Energiequelle (26) verbunden ist, aufnimmt und wobei die Schaltung eine Multiplex-Einheit (25) zum aktiven Steuern einer Ansteuerschaltung (15, 20, 21) umfasst.

4. Tragbare Lichtvorrichtung nach Anspruch 3, wobei die Ansteuerschaltung (15, 20, 21) eine erste Ansteuerschaltung (15), die einen universellen seriellen Bus umfasst, ist.

5. Tragbare Lichtvorrichtung nach Anspruch 4, wobei die serielle Bus-Schaltung (15) gleichzeitig mit der Hauptlichteinheit (10) aktivierbar ist.

6. Tragbare Lichtvorrichtung nach Anspruch 3, wobei die Ansteuerschaltung (15, 20, 21) eine Hauptlichtansteuerschaltung (20) ist.

7. Tragbare Lichtvorrichtung nach Anspruch 3, wobei die Ansteuerschaltung (15, 20, 21) eine Panel-Array-Ansteuerschaltung (21) ist.

8. Tragbare Lichtvorrichtung nach einem der Ansprüche 3-7, wobei die Multiplex-Einheit (25) Teil eines Mikrocontrollers oder einer separaten Schaltung ist.

9. Tragbare Lichtvorrichtung nach einem der Ansprüche 3-8, wobei die Multiplex-Einheit (25) ein System umfaßt zur gleichzeitigen Verteilung einer festgelegten Spannung und Stromstärke zum Versorgen eines Mikrocontrollers (27) zur Aktivierung einer Schaltung.

10. Tragbare Lichtvorrichtung nach Anspruch 9, wobei ein Auswahlmittel (16) zum Senden eines hohen Impulses an den Mikrocontroller (27) bereitgestellt ist, und wobei der Mikrocontroller (27) programmiert ist, um nach dem hohen Impuls, der sich zwischen Sequenzen bewegt, zu suchen.

11. Tragbare Lichtvorrichtung nach Anspruch 10, wobei der hohe Impuls ein erster, zweiter oder dritter Impuls, sein kann, der einen Befehl enthält die gleich oder verschieden voneinander sein können.

12. Tragbare Lichtvorrichtung nach Anspruch 10 oder 11, wobei der Mikrocontroller (27) konfiguriert ist, um einen ersten Impuls, der einen Befehl umfasst, an die Multiplex-Einheit (25) zu senden, um die Hauptlichteinheit (10) zu aktivieren, indem ein Strom einer Energiequelle von einer internen Energiequelle (26) durch die Ansteuerschaltung (15, 20, 21) fließen gelassen wird oder, um einen zweiten Impuls, der einen Befehl umfasst, an die Multiplex-Einheit (25) zu senden, um die Anordnung mehrerer Lichtquellen (12a-c) zu aktivieren, indem ein Strom einer Energiequelle von der internen Energiequelle (26) durch die Panel-Array-Ansteuerschaltung (15, 20, 21) fließen gelassen wird.

13. Tragbare Lichtvorrichtung nach einem der Ansprüche 10 - 12, wobei der Mikrocontroller (27) konfiguriert ist, um einen dritten Impuls, der einen Befehl umfasst, an die Multiplex-Einheit (25) zu senden, um die Anordnung mehrerer Lichtquellen (12a-c) und die Hauptlichteinheit (10) gleichzeitig zu aktivieren, indem ein Strom einer Energiequelle von der internen Energiequelle (26) durch die Ansteuerschaltung (15, 20, 21) fließen gelassen wird.

## Revendications

1. Dispositif lumineux portable comprenant :
- un élément formant corps principal (9) comprenant une forme sensiblement tubulaire;
- un élément formant tête (11) relié de manière articulée à l'élément formant corps principal (9) au moyen d'une liaison articulée (28) pour permettre orientation multiple de l'élément formant tête (11) par rapport à l'élément formant corps principal (9), l'élément formant tête (11) comprenant une unité lumineuse principale (10), et
- un élément formant ailette (13a-c) relié de manière articulée à l'élément formant tête (11), dans lequel l'élément formant ailette (13a-c) reçoit un réseau de sorties lumineuses multiples (12a-c) le long d'une surface d'éclairage, qui sont configurées pour fournir une assistance lumineuse supplémentaire à l'unité lumineuse principale (10), et dans lequel l'unité lumineuse principale (10) et le réseau de sorties lumineuses multiples (12a-c) sont configurés pour être activés simultanément ou pour être activés séparément ;
**caractérisé en ce que** l'unité lumineuse principale (10) est configurée pour fournir un éclairage à faisceau de lumière, **en ce que** l'élément formant ailette est configuré pour passer d'un état replié dans lequel le dispositif lumineux peut être utilisé comme une lampe torche portative, et un état déployé dans lequel l'élément formant ailette fournit une assistance d'éclairage à l'unité lumineuse principale (10) en augmentant une surface d'éclairage,
et **en ce qu'**une partie en retrait est prévue dans et le long de la surface externe de l'élément formant corps principal, la partie en retrait étant adaptée pour recevoir l'élément formant ailette (13a-c) à l'état replié dans lequel l'élément formant ailette est replié vers l'intérieur contre l'élément formant corps principal.

2. Dispositif lumineux portable selon la revendication 1, dans lequel le dispositif comprend un aimant de terre rare (17) prévu dans une position éloignée par rapport à l'élément formant tête (11), de préférence dans une partie socle de l'élément formant corps principal (9).

3. Dispositif lumineux portable selon les revendications 1 ou 2, dans lequel l'élément formant corps principal (9) loge un circuit relié à une source d'énergie interne (26), et dans lequel le circuit comprend une unité de multiplexage (25) permettant de commander activement un circuit de commande (15, 20, 21).

4. Dispositif lumineux portable selon la revendication 3, dans lequel le circuit de commande (15, 20, 21) est un premier circuit de commande (15) comprenant un bus série universel.

5. Dispositif lumineux portable selon la revendication 4, dans lequel le circuit à bus série (15) peut être activé en même temps que l'unité lumineuse principale (10).

6. Dispositif lumineux portable selon la revendication 3, dans lequel le circuit de commande (15, 20, 21) est un circuit de commande de l'éclairage principal (20).

7. Dispositif lumineux portable selon la revendication 3, dans lequel le circuit de commande (15, 20, 21) est un circuit de commande de réseau de panneaux (21).

8. Dispositif lumineux portable selon l'une quelconque des revendications 3 à 7, dans lequel l'unité de multiplexage (25) fait partie d'un microcontrôleur ou d'un circuit séparé.

9. Dispositif lumineux portable selon l'une quelconque des revendications 3 à 8, dans lequel l'unité de multiplexage (25) comprend un système permettant de distribuer simultanément une tension et un courant prédéterminés pour alimenter un microcontrôleur (27) afin d'activer un circuit.

10. Dispositif lumineux portable selon la revendication 9, dans lequel un moyen de sélection (16) est prévu pour envoyer une impulsion élevée au microcontrôleur (27), et dans lequel le microcontrôleur (27) est programmé pour rechercher l'impulsion élevée se déplaçant entre des séquences.

11. Dispositif lumineux portable selon la revendication 10, dans lequel l'impulsion élevée peut être une première, une deuxième ou une troisième impulsion, contenant une commande qui peut être identique aux autres ou différente.

12. Dispositif lumineux portable selon les revendications 10 ou 11, dans lequel le microcontrôleur (27) est configuré pour envoyer une première impulsion comprenant une commande à l'unité de multiplexage (25) pour activer l'unité lumineuse principale (10), en permettant à un flux d'une source d'énergie de s'écouler à partir d'une source d'énergie interne (26) à travers le circuit de commande (15, 20, 21), ou pour envoyer une deuxième impulsion comprenant une commande à l'unité de multiplexage (25) pour activer le réseau de sorties lumineuses multiples (12a-c), en permettant à un flux d'une source d'énergie de s'écouler à partir de la source d'énergie interne (26) à travers le circuit de commande de réseau de panneaux (15, 20, 21).

13. Dispositif lumineux portable selon l'une quelconque des revendications 10 à 12, dans lequel le microcontrôleur (27) est configuré pour envoyer une troisième impulsion comprenant une commande à l'unité de multiplexage (25) pour activer le réseau de sorties lumineuses multiples (12a-c) et l'unité lumineuse principale (10) simultanément, en permettant à un flux d'une source d'énergie de s'écouler à partir de la source d'énergie interne (26) à travers le circuit de commande (15, 20, 21).
